# EUROPEAN PATENT SPECIFICATION

(11) **EP 2 999 026 B1**
(45) Date of publication and mention of the grant of the patent: **17.01.2018**
(21) Application number: 14798648.3
(22) Date of filing: 20.03.2014
(51) Int. Cl.: H01M 2/10, H01M 10/653, H01M 2/12, H01M 10/6551, H01M 10/617, H01M 10/48, H01M 10/625, H01M 10/643

(54) **BATTERY PACK MANUFACTURING METHOD**
VERFAHREN ZUR HERSTELLUNG EINES BATTERIEPACKS
PROCÉDÉ DE FABRICATION DE BLOC-BATTERIE

(30) Priority: 15.05.2013 JP 2013102778; 15.11.2013 JP 2013237286
(43) Date of publication of application: 23.03.2016
(73) Proprietor: Sanyo Electric Co., Ltd., Osaka 574-8534 (JP)
(72) Inventor: YONEDA, Haruhiko, Osaka-shi Osaka 540-6207 (JP); HAINO, Masami, Osaka-shi Osaka 540-6207 (JP); KISHIDA, Yuji, Osaka-shi Osaka 540-6207 (JP); KINUGAWA, Terumasa, Osaka-shi Osaka 540-6207 (JP); KOUTARI, Masato, Osaka-shi Osaka 540-6207 (JP)
(74) Representative: Grünecker Patent- und Rechtsanwälte PartG mbB
(86) International application number: PCT/JP2014/001628
(87) International publication number: WO 2014/184993

(56) References cited:
- EP-A2- 1 487 034
- WO-A1-2012/133708
- JP-A- 2001 322 608
- JP-A- 2007 157 358
- JP-A- 2007 157 358
- JP-A- 2008 066 001
- JP-A- 2008 293 863
- JP-A- 2009 218 012
- JP-A- 2011 181 415
- JP-A- 2011 181 415
- JP-A- 2012 205 371
- JP-U- H 077 064

## Description

### TECHNICAL FIELD

The present invention is related to a battery pack and a manufacturing method of the battery pack in which heat radiation is carried out by potting resin equally disposed on surfaces of battery cells and a battery holder.

### BACKGROUND ART

A battery pack is widely used as a power source, such as, a power tool, an electric assist bicycle, an electric auto-bike, a hybrid vehicle, an electric vehicle, and the like, and in addition as electric power storages for home use, shop use, and the like. Incorporated battery cells radiate heat when the battery pack attached to an electric device is used or charged, etc. It is important to radiate heat outside in a view of charge and discharge property and life property of the battery pack. In battery pack disclosed in patent literature 1, a battery cell is stored in a battery case and a lid portion, and space within the battery case is filled up with a potting resin. Therefore, heat which is generated from the incorporated battery cell, can be radiated to the case side.

Moreover, as a power tool, an electric assist bicycle, an electric auto-bike, a hybrid vehicle, an electric vehicle, or the like is used outdoors, it is necessary that a battery core pack including the battery cells, a circuit board, and the like in a state of a waterproof structure, is stored in a case. Therefore, in a battery pack disclosed in patent literature 2, the battery core pack including the plural battery cells is stored in a flexible waterproof bag, and then the battery pack can have the waterproof structure.
In Patent literature 3 a power supply apparatus which includes a battery cell stack obtained by stacking a plurality of battery cells, a cover case surrounding an outside of the battery cell stack is disclosed. The gap between the battery cell stack and the cover case us filled with resin in order to make the cell stack waterproof.

### Citation List

### Patent Literature

Patent Literature 1: Japanese Laid-Open Patent Publication No. 2004-39485
Patent Literature 2: Japanese Laid-Open Patent Publication No. 2012-79547
Patent Literature 3: WIPO Patent Publication No. 2012-133708

### SUMMARY OF THE INVENTION

In a battery pack in which a battery cell is stored in a battery case, in a structure in which the battery cell and an inner surface of the battery case are thermally coupled, it is necessary that a space between the battery cell and the inner surface of the battery case is filled with a potting resin. The outer shape is increased in size, and a volume of the space between the battery cell and the inner surface of the battery case is increased. Therefore, a volume of the injected potting resin is increased, and there is a problem that a weight of the battery pack is increased.

The present disclosure is developed for the purpose of solving such drawbacks. One non-limiting and explanatory embodiment provides a battery pack and the manufacturing method of the battery pack in which while a volume of an injected potting resin is a minimum, the potting resin tightly contacts a battery cell, and heat of the battery cell can be appropriately radiated.

A battery pack of the present disclosure comprises battery cells, a battery holder holding the battery cells, a waterproof bag storing the battery holder holding the battery cells as a waterproof structure, and a potting resin being injected in the waterproof bag, and the waterproof bag has a check valve which opens only at the time of exhausting an inner air, and the check valve is provided so as to face a side surface of the battery holder where lead plates are disposed in a direction perpendicular to an extending direction of the battery cells.

A battery pack of the present disclosure comprises battery cells, a battery holder holding the battery cells, a waterproof bag storing the battery holder holding the battery cells as a waterproof structure, and a potting resin being injected in the waterproof bag, and the waterproof bag has a check valve which enables an air to flow in the waterproof structure, and the check valve is provided so as to face a side surface of the battery holder where lead plates are disposed in a direction perpendicular to an extending direction of the battery cells.

In the battery pack of the present disclosure, the check valve is provided so as to face a center of the side surface of the battery holder where lead plates are disposed.

In the battery pack of the present disclosure, in a posture that the side surface of the battery holder faces upward, by intaking the inner air outward through the check valve, the potting resin injected in the waterproof bag are disposed so as to contact surfaces of the battery cells.

A manufacturing method of a battery pack of the present disclosure has battery cells, a battery holder holding the battery cells, a waterproof bag storing the battery holder holding the battery cells as a waterproof structure, and a potting resin being injected in the waterproof bag, and the waterproof bag has a check valve which opens only at the time of exhausting an inner air, and the method comprises an injecting step injecting the uncured pasty or liquid potting resin into the waterproof bag storing the battery holder, in a state that a circuit board is located on an upper surface of the battery holder holding the battery cells.

In the manufacturing method of the battery pack of the present disclosure, in the injecting step, the waterproof bag is partially pushed from outside, and in this state the potting resin is injected into the waterproof bag.

In the manufacturing method of the battery pack of the present disclosure, in the injecting step, the waterproof bag is pushed in a predetermined area through an elastic body.

In the manufacturing method of the battery pack of the present disclosure, a display is disposed on the circuit board.

In the battery pack of the present disclosure, the waterproof bag has a check valve which opens only at the time of exhausting an inner air. Therefore, in a state that the potting resin is injected in the waterproof bag, the air inside the waterproof bag is exhausted through the check valve, and equally the potting resin tightly contacts the surfaces of the battery cells and the battery holder, and then heat of the battery cells can be efficiently radiated. Therefore, it is not necessary that a space between the battery cell and the inner surface of the battery case is filled with a potting resin like the conventional technology, and while a volume of an injected potting resin is a minimum, heat of the battery cell can be appropriately radiated.

Moreover, in the battery pack of the present disclosure, the waterproof bag has a check valve which enables an air to flow in the waterproof structure. Accordingly, when the battery cells become thermal runaway and the safety valve of the battery cells open, even though the waterproof bag 8 is filled with the generated gas, the gas can be appropriately exhausted outside.

Moreover, in the battery pack of the present disclosure, the check valve is provided so as to face a side surface of the battery holder where lead plates are disposed. In a state that the potting resin is injected in the waterproof, the air inside the waterproof is exhausted through the check valve. Therefore, the potting resin tightly and efficiently contacts the surfaces of the battery cells in the extending direction of the battery cells, and by increasing the adhesion area between the battery cells and the potting resin, the thermal conductivity can be improved.

Moreover, in the battery pack of the present disclosure, the check valve is provided so as to face a center of the side surface of the battery holder where lead plates are disposed. Therefore, the potting resin can tightly and equally contact the surfaces New description for entry into European Phase replacing the previous description of the plural battery cells, and the thermal conductivities of the plural battery cells can be equalized.

Moreover, in the battery pack of the present disclosure, in a posture that the side surface of the battery holder faces upward, by intaking the inner air outward through the check valve, the potting resin injected in the waterproof bag are disposed so as to contact surfaces of the battery cells. Therefore, intaking work is simply carried out. Then, appropriately, the potting resin can tightly contacts the surfaces of the battery cells upward from the bottom in the extending direction of the battery cells.

The manufacturing method of the battery pack according to claim 1, the uncured pasty or liquid potting resin is injected into the waterproof bag storing the battery holder, in a state that a circuit board is located on an upper surface of the battery holder holding the battery cells. While it is prevented that the potting resin covers the circuit board, the potting resin can be injected in the waterproof bag. Therefore, adverse effect caused by the adhesion of the potting resin on the surface of the circuit board can be effectively prevented.

Moreover, in the manufacturing method of the battery pack of the present disclosure, in the injecting step, the waterproof bag is partially pushed from outside, and then the flow of the potting resin is controlled. Therefore, it is possible to surely inject the potting resin even in the area where it is difficult to inject the potting resin in shapes of some battery holder or some waterproof bag. In a state that the waterproof bag is partially pushed from outside, the injected potting resin is dammed up by the pushing portion, and is accumulated. In this state, the accumulated potting resin is surely moved and injected in the area where it is difficult to inject the potting resin. Further, by releasing pushing the accumulated potting resin flows down at one time, and then the potting resin is surely moved and injected at the area where it is difficult to surely inject the potting resin. Therefore, even in the area where it is difficult to inject the potting resin in shapes of some battery holder or some waterproof bag, while the volume of the potting resin is decreased, the potting resin is surely injected. The potting resin tightly contacts the battery cells, and heat of the battery cells can be appropriately radiated.

Moreover, in the manufacturing method of the battery pack of the present disclosure, in the injecting step, the waterproof bag is pushed in a predetermined area through an elastic body. Therefore, the waterproof bag can tightly contact the surface of the battery core pack without spaces surely, and while the volume of the potting resin is decreased in a minimum, the potting resin can be injected.

### BRIEF DESCRIPTION OF DRAWINGS

FIG. 1 is a perspective view of a battery pack of the present embodiment.
FIG. 2 is an explored perspective view of the battery pack of the present embodiment.
FIG. 3 is a perspective view in a state that a battery core pack is stored in a waterproof bag and an opening portion of the waterproof bag is not sealed.
FIG. 4 is a perspective view in a state that the battery core pack is stored in the waterproof bag and the opening portion of the waterproof bag is sealed.
FIG. 5 is a perspective view in a state that the battery core pack is stored in the waterproof bag and the opening portion of the waterproof bag is sealed, and the waterproof bag is intaked through a check valve.
FIG. 6 is a sectional view of a battery holder before intaking of the present embodiment.
FIG. 7 is a sectional view of the battery holder after intaking of the present embodiment.
FIG. 8 is a sectional view in a state that in a injecting step injecting a potting resin into the waterproof bag, the waterproof bag is partially pushed from outside.
FIG. 9 is an enlarged view in a state that the waterproof bag tightly contacts a surface of a LED disposed on a circuit board.

### DESCRIPTION OF EMBODIMENTS

Hereinafter, the embodiment of the present invention will be described referring to drawings. However, the following embodiments illustrate a battery pack 1 and a manufacturing method of the battery pack which is aimed at embodying the technological concept of the present invention, and the present invention is not limited to the battery pack 1 and the manufacturing method of the battery pack described below.

Hereinafter, the embodiment of the present invention will be described referring to drawings. However, the following embodiments illustrate a battery pack 1 and a manufacturing method of the battery pack which is aimed at embodying the technological concept of the present invention, and names, shapes, sizes, materials, or the like of members are described, but and the present invention is not limited to the battery pack 1 and the manufacturing method of the battery pack described below.

The battery pack 1 is mainly attached to electric vehicles, and power is supplied to a driving motor. The present embodiment is used as a power source for, such as, an electric assist bicycle, an electric auto-bike, an electric wheelchair, an electric tricycle, an electric cart, or the like. However, the present embodiment is not limited to uses of the battery pack 1, and the battery pack 1 is used as power sources of various electric devices which are used outdoors, such as, the power tool, and the like.

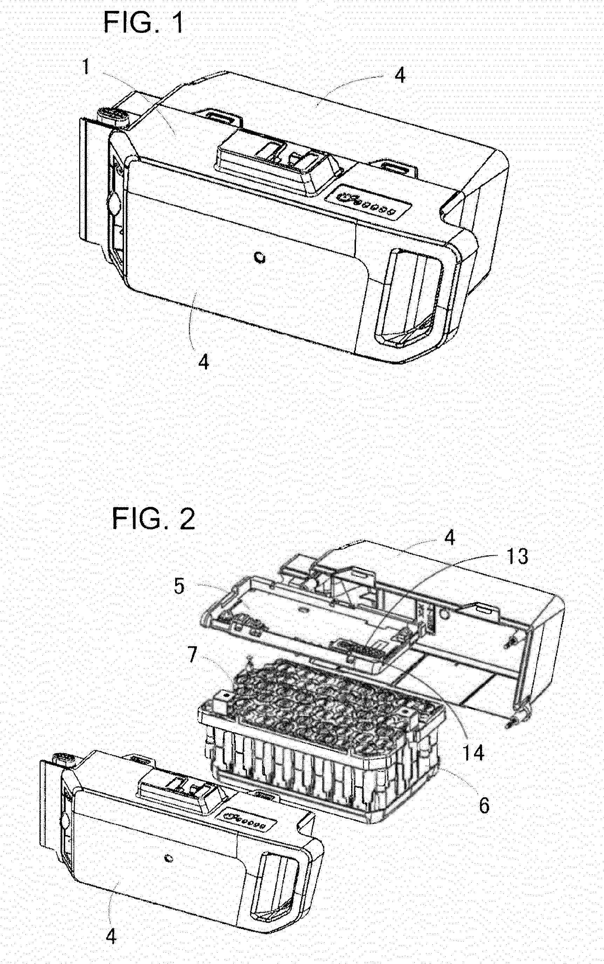

The battery pack 1 of the present embodiment shown in FIG. 1 and FIG. 2 is mainly attached to an electric device body, and supplies power to the electric device body. The battery pack 1 used with such aim has a battery holder 6 to dispose plural battery cells in multiple stages and multiple rows in a posture that the plural battery cells are disposed in parallel. The battery cells have positive and negative terminals at both ends thereof, and these terminals are disposed at the same planes. Then, the battery pack 1 has lead plates 7 which are connected to the terminals of the battery cells stored or held in the battery holder 6 and couple the adjacent battery cells in series or parallel.

The battery cell is a rechargeable lithium ion secondary battery. The battery cell is not limited to the lithium ion secondary battery, a nickel-hydrogen battery or a nickel cadmium battery can be used. Further, in the battery pack 1 of the present embodiment, cylindrical shaped batteries are used, and it is not limited to this, and prismatic shaped batteries, flat shaped batteries can be used. In a battery core pack 2, the plural battery cells are disposed in multiple stages and multiple rows in a posture that the plural battery cells are disposed in parallel. Then, the battery cells are stored in the battery holder 6. In the battery pack 1 of the present embodiment, 50 pieces of cylindrical batteries are used, and connected in 10 pieces-series and 5 pieces-parallel.

As shown in a explored perspective view of the battery pack 1 in FIG. 2, the terminals at both ends of the battery cells are disposed at the same planes. In a posture that the plural battery cells are disposed in parallel, the battery cells are disposed, stored, and held in the battery holder 6. Moreover, the battery holder comprises a pair of battery holder units, and those are press-fitted each other. The one battery holder unit has holding tubes to which one ends of the battery cells are inserted, and then the holding tubes store the battery cells. The battery holder 6 is made of insulating material, such as, thermoplastics resin of plastic or the like. Further, in a state that the battery cells are inserted into the holding tubes of the one battery holder unit, the other battery holder unit is disposed and coupled, and then battery storage portions are formed so as to cover peripheral surfaces except for both ends of the battery cells. Therefore, the plural battery cells are stored and held in a pair of the battery holder units. In FIG. 2, a waterproof bag is not shown for convenience.

As shown FIG. 2, the battery holder 6 disposes plural battery cells in multiple stages and multiple rows, and holds them at a fixed position. And the terminals of the battery cells are exposed at the opening portions which are provided at end surfaces of the battery holder 6, and those terminals are connected by the lead plate 7. Then, the lead plates 7 are respectively disposed at both side facing surfaces of the battery holder 6. Further, the battery cells are connected to the circuit board 5 through the lead plates 7. This circuit board 5 is disposed on an upper surface located between end surfaces of the battery holder 6. In addition, the circuit board 5 has LEDs 13 on the upper surface to display a remaining capacity and the like. A LED holder 14 is disposed on an upper surface of the circuit board 5 shown in FIG. 2. The plural LEDs 13 are disposed inside the LED holder 14, facing plural display windows provided at the LED holder 14

As mentioned above, the plural battery cells are held by the battery holder 6 at the fixed position, and the circuit board 5 is fixed on an upper surface of a board holder, and each of the terminals of the battery cells is connected to the lead plate 7, and is connected to the circuit board 5 through the lead plates 7, and then those constitute the battery core pack. As shown in FIG. 1 and FIG. 2, the battery core pack 2 is stored in the waterproof bag 8, and then it is stored in the battery case 4.

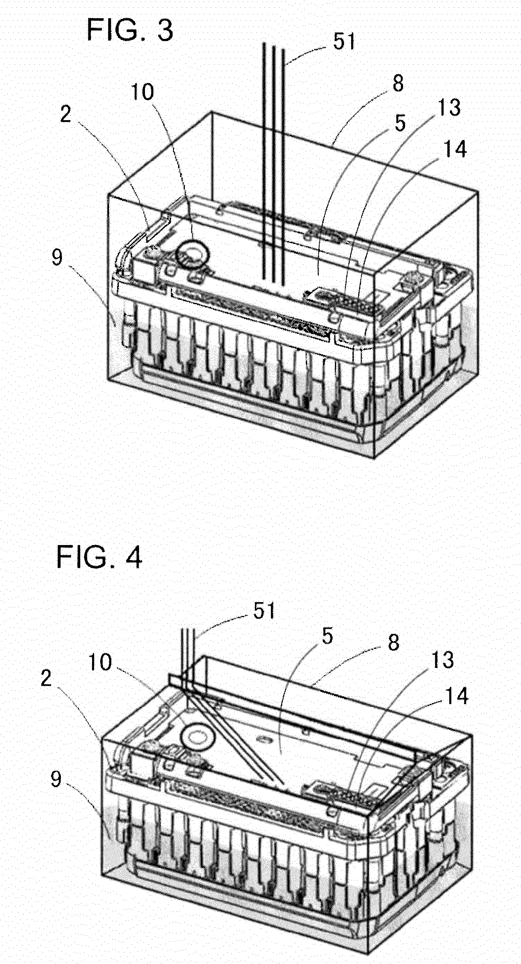

As shown in FIG. 3, the battery core pack 2 is stored in the waterproof bag 8 in order to improve waterproof property as a water seal structure. Especially, in a state that the battery core pack 2 is tentatively fixed, lead wires 51 are extended from the waterproof bag 8. Further, in a state that the battery core pack 2 is disposed in the waterproof bag 8, the waterproof bag 8 is filled with potting resin 9.

The waterproof bag 8 shown in FIG. 3 are made of a flexible sheet having a bag shape. Plastic sheet can be used as the flexible sheet of the waterproof bag 8. The plastic sheet can be made of material, such as, polyimide (PI), polyethylene imide (PEI), polyethylene terephthalate (PET), and the like. Those plastic sheets are excellent in flexibility and heat-resisting property. In addition, those plastic sheets are not dissolved by an electrolyte which is exhausted at the time of opening a safety valve of the battery cell, and do not cause a chemical reaction. Here, as the flexible sheet used for the waterproof, other plastic sheets other than the above can be used. Further, as the waterproof bag 8 is transparent, in FIG. 3, the battery core pack 2 in the waterproof bag 8 is described through the waterproof bag 8.

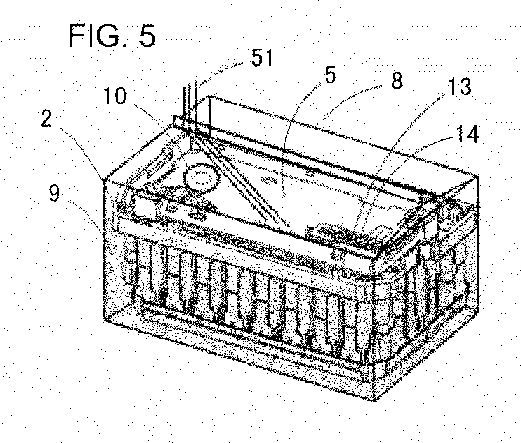

The waterproof bag 8 shown in FIG. 3 is of a bag shape having an opening portion at one end, and through the battery core pack 2 is inserted through this opening portion. The lead wires 51 are extended through the opening portion at the one end. The lead wires 51 are connected to a connector including charging and discharging terminals and signal lines. Therefore, the battery core pack 2 is stored in the waterproof bag 8, and also the lead wires 51 are extended from the waterproof bag 8 to outside through the opening portion of the waterproof bag 8. In addition, as shown in FIG. 4 and FIG. 5, the lead wires 51 are extended as a waterproof structure from the opening portion of the waterproof bag 8.

FIG. 3 shows a state that the potting resin 9 is injected into the waterproof bag 8 which stores the battery core pack 2. As shown in FIG. 3, the battery core pack 2 is disposed in the waterproof bag 8 in a posture that both surfaces where the lead plates 7 are disposed are of a bottom surface and a top surface, and the injected potting resin 9 is accumulated in a bottom portion of the waterproof bag 8. Further, as shown in FIG. 3, the battery core pack 2 is stored in the waterproof bag 8 in a state that the circuit board 5 is disposed on the upper surface of the battery holder 6, and the potting resin 9 is injected. Thus, as the potting resin 9 is injected in a state that the circuit board 5 is disposed on the upper surface of the battery holder 6, it can be effectively prevented that the uncured pasty or liquid potting resin 9 injected into the waterproof bag 8 undesiredly adheres to the circuit board 5. The potting resin 9 injected into the waterproof bag 8 is accumulated in the bottom portion of the waterproof bag 8, and is thermally coupled to each of the battery cells stored in the battery holder 6. In addition, in the battery pack of the present embodiment, as it is not shown in the figures, after the potting resin 9 is injected into the waterproof bag 8, the lead wires 51 are extended through a consecutive space of the opening portion of the waterproof bag 8, and the consecutive space is filled with sealing material, and then the lead wires 51 come out through the consecutive space of the water seal structure.

After the battery core pack 2 is stored in the waterproof bag 8 and the potting resin 9 is injected, FIG. 4 shows a state that the lead wires 51 come out through the opening portion of the waterproof bag 8 and the battery core pack 2 is sealed by the waterproof structure. As shown in FIG. 4, the waterproof bag 8 has a check valve 10 which opens only at the time of exhausting an inner air. In the present embodiments, in a state that the opening portion of the waterproof bag 8 is sealed by the waterproof structure, the check valve 10 is provided facing the surface of the battery holder 6 where the lead plates 7 are disposed in the direction perpendicular to the extending direction of the battery cells stored in the battery holder 6.

The check valve 10 has the structure which opens only at the time of exhausting an inner air. Therefore, an intake inlet of an intake device is disposed at the check valve 10, and the inner air inside the waterproof bag 8 can be intaked by intaking. When the inner air of the waterproof bag 8 is intaked, in FIG. 3 and FIG. 4, the potting resin 9 accumulated in the bottom portion of the waterproof bag 8, namely in the one side surface side of the battery holder 6, flows into spaces 61 between the battery cells and the battery holder 6, and as the battery cells tightly contact the potting resin having a higher thermal conductivity than that of the air, the heat transfer property and the thermal conductivity can be improved.

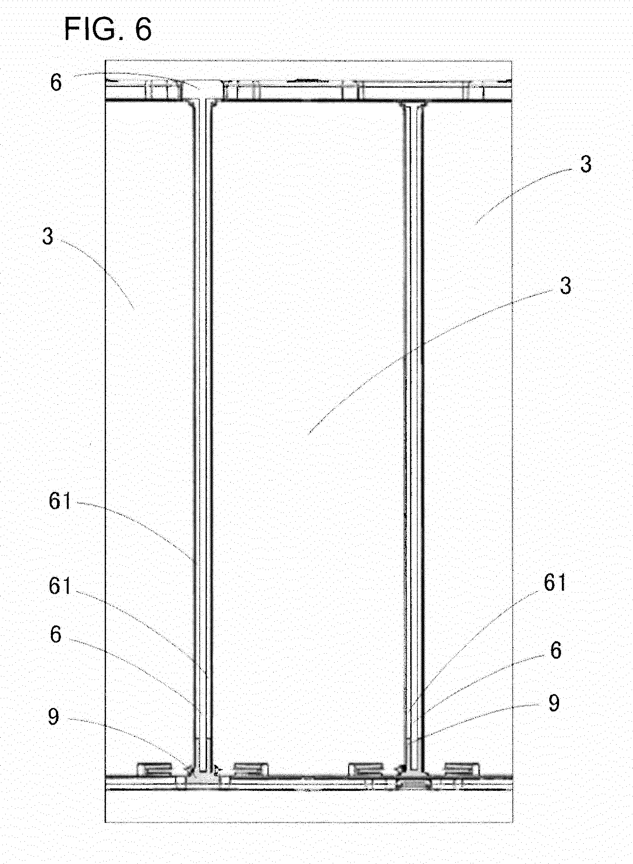

FIG. 6 is a sectional view of the battery holder 6 in a state that the battery core pack 2 is stored in the waterproof bag 8 of FIG. 4 and the potting resin 9 is injected. As shown in FIG. 6, the spaces 61 are provided between the battery cells 3 and the battery holder 6. The spaces 61 are constant clearances which allow size tolerances of the battery cells 3 and the battery holder 6. However, by the spaces 61, there is the air between the battery cells 3 and the battery holder 6, and the heat transfer property decreases, and then heat generated by heated battery cannot be radiated. As the result, temperature differences between the battery cells occur, and the cycle property, the battery capacity, or the like varies in each of the battery cells, and then there is a problem that life of the battery pack 1 becomes short.

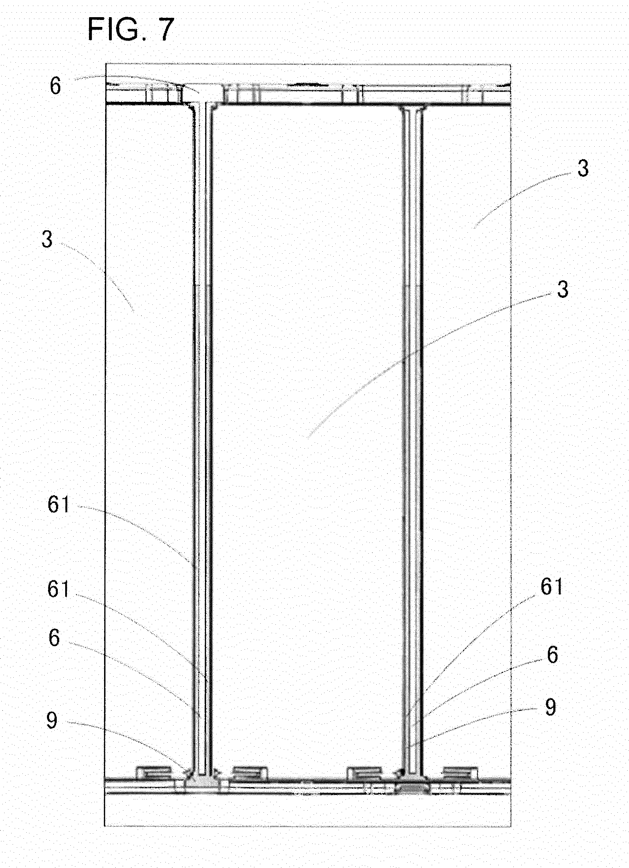

FIG. 7 is a sectional view of the battery holder 6 in a state that the battery core pack 2 is stored in the waterproof bag 8 of FIG. 5 and the intake inlet of the intake device is disposed at the check valve 10 and the inner air inside the waterproof bag 8 is intaked. As shown in FIG. 7, by being intaked from the check valve, the spaces 61 between the battery cells 3 and the battery holder 6 are filled with the potting resin 9. This is the reason why the inner air inside the waterproof bag 8 is intaked from the check valve 10 and the air at the spaces 61 between the battery cells 3 and the battery holder 6 is intaked and the uncured pasty or liquid potting resin 9 accumulated in the bottom portion of the waterproof bag 8 flows into the spaces 61 between the battery cells 3 and the battery holder 6. By this configuration, it is not necessary that the whole inside of the waterproof bag 8 which stores the battery core pack 2 is filled with the potting resin 9, and while the volume of the potting resin 9 is cut down, the spaces 61 between the battery cells 3 and the battery holder 6 can be filled with the potting resin 9. Therefore, the battery cells and the battery holder 6 are surely thermal-coupled, and the thermal conductivity of the battery cells 3 can be improved.

Further, the battery core pack 2 shown in FIG. 4 is stored in the waterproof bag 8, and the potting resin 9 is injected, and the lead wires 51 come out through the opening portion of the waterproof bag 8, and then it is sealed in the waterproof structure. In this state, as the injected potting resin 9 is accumulated in the bottom portion of the waterproof bag 8, there is a problem that the outer appearance of the bottom portion of the waterproof bag 8 is big. However, the battery core pack 2 shown in FIG. 5 of the present embodiment is stored in the waterproof bag 8, and the opening portion of the waterproof bag 8 is sealed. As by being intaked from the check valve 10, the spaces 61 between the battery cells 3 and the battery holder 6 are filled with the uncured pasty or liquid potting resin 9 accumulated in the bottom portion, or the potting resin 9 tightly contacts the surface of the battery holder 6, the uncured pasty or liquid potting resin 9 accumulated in the bottom portion is dispersed, it is prevents that the outer appearance of the bottom portion of the waterproof bag 8 becomes big. Therefore, the outer appearance of the bottom portion of the waterproof bag 8 is the approximately same size as the outer appearance of the waterproof bag 8 at the side where the check valve 10 is provided.

In the present embodiment, as shown in FIG. 4, as the check valve 10 provided at the waterproof bag 8 is provided so as to face the center of the side surface of the battery holder 6 on which the lead plates 7 are disposed, when the intake inlet (not shown in the figures) of the intake device (not shown in the figures) is disposed at the check valve 10 and the inner air inside the waterproof bag 8 is intake, strength of sucking the potting resin 9 into the spaces 61 between the plural battery cells and the battery holder 6 is equally applied. Therefore, dispersion of the resin volumes which flow into the spaces between the battery cells and the battery holder 6 can be reduced, and then temperature differences between the battery cells can reduced.

The check valve 10 used in the present embodiment has the structure which opens only at the time of exhausting an inner air. As other embodiment, a check valve 10 can be to enable an air to flow in the waterproof structure. In this other embodiment, when the battery cells become thermal runaway and the safety valve of the battery cells open, even though the waterproof bag 8 is filled with the generated gas, the gas can be appropriately exhausted outside.

In the above structure, by exhausting the air of the waterproof bag, the potting resin can be injected among the battery cell, the battery holder, and the waterproof bag. However, in shapes of some battery holder or some waterproof bag, it is difficult to inject the potting resin in an ideal state. When the potting resin is not injected in a preferable state, thermal conductivity of the battery cells which do not contact the potting resin, becomes bad, and adverse effects that the battery temperature is increased, etc. occur. Further, the LEDs or the like are disposed inside, and for example, as shown in FIG. 2 to FIG. 5, the LEDs 13 are disposed on the circuit board 5, and lights of the LEDs 13 is emitted outside. In such a battery pack, when the LEDs 13 are deeply buried in the potting resin 9, adverse effect that the potting resin 9 attenuates the lights of the LESs and the lights are not brightly emitted outside, occurs. Not only the shape of the battery cell or the battery holder but also the lead wires disposed inside have adverse effect in injecting the potting resin. It is the reason why those prevent the potting resin from flowing and the area where the potting resin is not injected occurs.

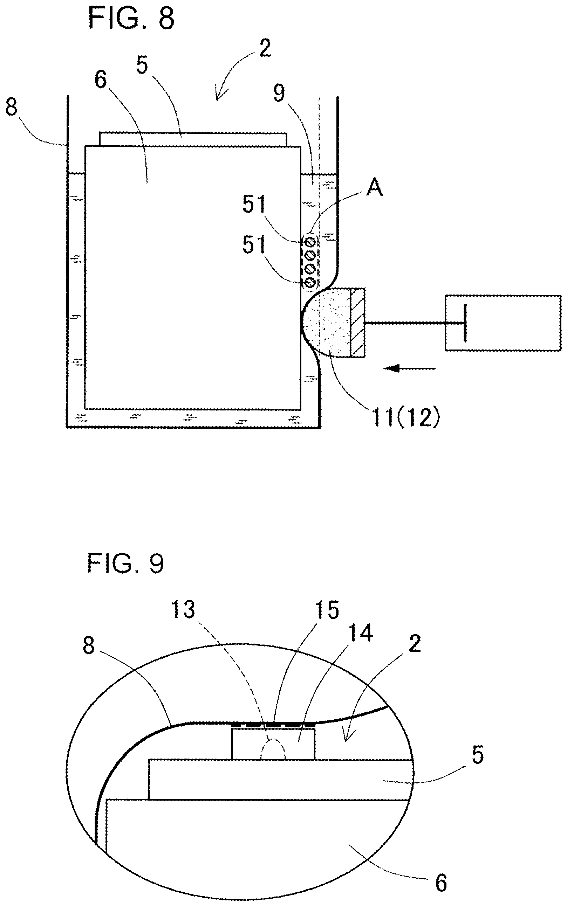

By controlling an injecting step in which the potting resin is injected into the waterproof bag, at the evacuating step, it is possible to surely inject the potting resin in the area where it is difficult to inject the potting resin. FIG. 8 shows a method to surely inject the potting resin 9 in the area where it is difficult to inject the potting resin. As shown in this figure, when the potting resin is injected or supplied into the waterproof bag 8, while the flow of the injected potting resin 9 is controlled by partially pushing the waterproof bag 8 from outside, the potting resin 9 is injected in a preferable state. In this figure, for example, when the lead wires 51 or the like exists and the potting resin 9 cannot be smoothly injected in the area A, as shown in this figure, the potting resin 9 is injected in a state that a portion below the area A is pushed. As the waterproof bag 8 tightly contacts the surface of the battery core pack 2 by pushing from outside, the space between the waterproof bag 8 and the battery core pack 2 becomes narrow, and the potting resin 9 is dammed up. Therefore, in this state, when the uncured pasty or liquid potting resin 9 is injected in the waterproof bag 8, the potting resin 9 is dammed up by a pushing portion 11, and is accumulated at the area A above that. Therefore, by pushing the portion below the area where it is difficult to inject the potting resin, the potting resin 9 is surely injected in the area A. After that, when pushing is released, the excessive potting resin 9 accumulated at the area A flows down, and is injected also at the portion below the area A. In the above method, the potting resin 9 is dammed up and is accumulated in the one portion, and this flows down and is injected at the lower portion. Therefore, the potting resin 9 can be surely injected also at the lower portion below the pushing portion 11. Namely, by pushing the portion above the area where it is difficult to surely inject the potting resin, the potting resin 9 is accumulated above the pushing portion 11, and flows down. Then, the potting resin 9 is surely injected below the pushing portion 11. Here, the pushing portion 11 is not necessarily disposed below the area where it is difficult to inject the potting resin. By pushing the portion above the area where it is difficult to surely inject the potting resin, the potting resin 9 is accumulated, and by releasing pushing the accumulated potting resin flows down at one time. Then, the potting resin 9 is surely injected at the area where it is difficult to surely inject the potting resin.

In FIG. 8, the pushing portion 11 of the waterproof bag 8 is an elastic body 12, and the waterproof bag 8 is pushed by the elastic body 12 from outside. The elastic body 12 is made of a plastic foam body resiliently deformed, a rubbery elastic body, or the like. In the method in which the waterproof bag 8 is pushed by the pushing portion 11 of the elastic body 12, the flexible waterproof bag 8 can tightly contact the surface of the battery core pack 2 without spaces surely. Here, the pushing portion can be also a board member of a plane shape, or a shape in which a surface thereof facing the waterproof bag is along the outer surface of the battery core pack. Further, a position and an area where the pushing portion 11 pushes a part of the waterproof bag 8, are optimally designed, considering shapes of the battery cells or the battery holder such that the potting resin 9 is injected and the potting resin 9 is accumulated above the pushing portion 11 and the potting resin 9 is injected in the area where it is difficult to inject.

In the method of supplying or injecting the potting resin 9 in the waterproof bag 8 in the above step, the potting resin 9 can be injected also at the area where it is difficult to inject the potting resin 9 by evacuating. The potting resin 9 in the uncured pasty or liquid state is injected into the waterproof bag 8. The potting resin 9 which is injected at the predetermined area, is cured in the waterproof bag 8. It is necessary that the potting resin 9 is injected at the predetermined area until it is cured. It is a reason why the potting resin 9 loses its liquidity and cannot be moved until it is cured. When the curing time is adjusted at a long time, the potting resin 9 can be injected at more preferable area or position. However, the curing time cannot be set at a longer time than necessary, considering handling after injecting or an efficiency of working. It is a reason why it cannot be moved to the next step or process until the potting resin 9 is cured. The curing time of the 2 liquid potting resin 9 is controlled by an added amount of a curing agent. In the above method, in the step or process of supplying the potting resin 9 into the waterproof bag 8, the flow of the potting resin 9 is controlled, and the potting resin 9 is injected at the area where it is difficult to inject the potting resin 9. In the above method, as the potting resin 9 is injected in the preferable state into the waterproof bag 8, the potting resin 9 can be injected in the optimal state without the curing time of the potting resin 9 becoming long.

Further, as shown in FIG. 2 to FIG. 5, the LEDs 13 are disposed on the circuit board 5 which is disposed on the upper surface of the battery holder 6. When the battery core pack 2 having the LEDs 13 is stored in the waterproof bag 8 and the potting resin 9 is injected, preferably it is prevented that the potting resin 9 adheres to the surfaces of the LEDs 13. In order to realize this, for example, as shown in FIG. 9, the one surface of a two-faced adhesive tape 15 is stuck on the upper surface of the LED holder 14, and the other surface of the two-faced adhesive tape 15 is stuck to the inner surface of the waterproof bag 8, and then the waterproof bag 8 tightly contacts the upper surface of the LED holder 14 without spaces. Thus, it is prevented that the potting resin 9 flows on the emitting surface side of the LEDs 13, and then it is surely prevented that the potting resin 9 adheres to the surfaces of the LEDs. As such a two-faced adhesive tape 15, a tape having a translucency which the lights of the LEDs 13 pass through is used. In the above method, while it is simply and easily prevented that the potting resin 9 adheres to the surfaces of the LEDs 13, the LEDs 13 surely emit lights outside.

## Claims

1. A manufacturing method of a battery pack (1) having:
battery cells (3);
a battery holder (6) holding the battery cells (3);
a waterproof bag (8) storing the battery holder (6) holding the battery cells (3) as a waterproof structure; and
a potting resin (9) being injected in the waterproof bag (8),wherein the waterproof bag (8) has a check valve (10) which opens only at the time of exhausting an inner air,
the method comprising:
an injecting step injecting the uncured pasty or liquid potting resin (9) into the waterproof bag (8) storing the battery holder (6), in a state that a circuit board (5) is located on an upper surface of the battery holder (6) holding the battery cells (3),
**characterizing in that:**
in the injecting step, the waterproof bag (8) is partially pushed from outside, and in this state the potting resin (9) is injected into the waterproof bag (8).

2. The manufacturing method of the battery pack according to claim 1, wherein in the injecting step, the waterproof bag (8) is pushed in a predetermined area through an elastic body (12).

3. The manufacturing method of the battery pack according to any one of claims 1 or 2, wherein a display is disposed on the circuit board (5).

## Patentansprüche

1. Herstellungsverfahren eines Batteriepacks (1) umfassend:
Batteriezellen (3);
ein Batteriehalter (6), der die Batteriezellen (3) hält;
eine wasserdichte Tasche (8), in der der Batteriehalter (6), der die Batteriezellen (3) hält, aufbewahrt wird als eine wasserdichte Struktur; und
ein Vergussharz (9), das in die wasserdichte Tasche (8) injiziert wird, wobei die wasserdichte Tasche (8) ein Rückschlagventil (10) aufweist, das sich nur zum Zeitpunkt des Ablassens einer inneren Luft öffnet,
das Verfahren umfassend:
einen Injektionsschritt, bei dem das ungehärtete zähflüssige oder flüssige Vergussharz (9) in die wasserdichte Tasche (8), in der der Batteriehalter (6) aufbewahrt wird, injiziert wird, in einem Zustand, in dem eine Leiterplatte (5) auf einer oberen Fläche des Batteriehalters (6), der die Batteriezellen (3) hält, positioniert ist,
**dadurch gekennzeichnet, dass**
in dem Injektionsschritt die wasserdichte Tasche (8) teilweise von außen gedrückt wird und in diesem Zustand das Vergussharz (9) in die wasserdichte Tasche (8) injiziert wird.

2. Das Herstellungsverfahren des Batteriepacks gemäß Anspruch 1,
wobei in dem Injektionsschritt die wasserdichte Tasche (8) in einem vorbestimmten Bereich durch einen elastischen Körper (12) gedrückt wird.

3. Das Herstellungsverfahren des Batteriepacks gemäß einem der Ansprüche 1 oder 2,
wobei eine Anzeige auf der Leiterplatte (5) angeordnet ist.

## Revendications

1. Procédé de fabrication d'un bloc batterie (1) comportant:
des cellules de batterie (3);
un support de batterie (6) maintenant les cellules de batterie (3);
un sac étanche à l'eau (8) stockant du support de batterie (6) maintenant les cellules de batterie (3) en tant que structure étanche à l'eau; et
une résine d'enrobage (9) étant injectée dans le sac étanche à l'eau (8), dans lequel le sac étanche à l'eau (8) possède un clapet anti-retour (10) qui s'ouvre seulement au moment de l'échappement d'un air intérieur,
le procédé comprenant :
une étape d'injection consistant à injecter la résine d'enrobage pâteuse ou liquide non durcie (9) dans le sac étanche à l'eau (8) stockant le support de batterie (6), dans un cas de figure dans lequel une carte de circuit (5) est située sur une surface supérieure du support de batterie (6) maintenant les cellules de batterie (3),
**caractérisé en ce que:**
dans l'étape d'injection, le sac étanche à l'eau (8) est partiellement poussé de l'extérieur, et **en ce que** dans ce cas de figure, la résine d'enrobage (9) est injectée dans le sac étanche à l'eau (8).

2. Procédé de fabrication du bloc batterie selon la revendication 1, dans lequel, lors de l'étape d'injection, le sac étanche à l'eau (8) est poussé dans une zone prédéterminée à travers un corps élastique (12).

3. Procédé de fabrication du bloc batterie selon l'une quelconque des revendications 1 ou 2,
dans lequel un écran est disposé sur la carte de circuit imprimé (5).
